# EUROPÄISCHE PATENTSCHRIFT

(11) **EP 0 872 537 B1**
(45) Veröffentlichungstag und Bekanntmachung des Hinweises auf die Patenterteilung: **03.07.2002**
(21) Anmeldenummer: 98106825.7
(22) Anmeldetag: 15.04.1998
(51) Int. Cl.: C10G 9/00, C10G 69/06

(54) **Verfahren zur Ethylenerzeugung aus einem Kohlenwasserstoffeinsatz**
Process for the production of ethylene from hydrocarbon feedstocks
Procédé de production d'éthylène à partir de charges hydrocarbonées

(30) Priorität: 17.04.1997 DE 19716092
(43) Veröffentlichungstag der Anmeldung: 21.10.1998
(73) Patentinhaber: Linde Aktiengesellschaft, 65189 Wiesbaden (DE)
(72) Erfinder: Wimmer, Johann-Peter, Dipl.-Ing. (FH), 80636 München (DE)

(56) Entgegenhaltungen:
- GB-A- 846 679
- DATABASE WPI Section Ch, Week 8815 Derwent Publications Ltd., London, GB; Class A41, AN 88-103750 XP002096743 & SU 1 333 691 A (GANDMAN Z E) , 30. August 1987

## Beschreibung

Die Erfindung betrifft ein Verfahren zur Ethylenerzeugung aus einem Kohlenwasserstoffeinsatz, wobei der Kohlenwasserstoffeinsatz einer Spaltung unterzogen wird, das so erzeugte Rohgas eine Quenchung mit Wasserwäsche, eine Rohgasverdichtung und eine Rohgastrocknung und -vorkühlung durchläuft und in einen Zerlegungsteil geleitet wird, im Zerlegungsteil eine C2/C3-Trennung des vorgekühlten Rohgases in einen C2 minus-Strom und in einen C3 plus-Strom erfolgt, besagter C2 minus-Strom über eine C2-Hydrierung geleitet und besagter C3 plus-Strom mit Hilfe einer C3/C4-Trennung in einen C3-Strom und in einen C4 plus-Strom zerlegt wird.

Cn (mit n = 2, 3, 4 oder 5) sind hier Kohlenwasserstoffe mit n Kohlenwasserstoffatomen, Cn minus bzw. plus sind Kohlenwasserstoffe mit n oder weniger bzw. mehr Kohlenwasserstoffatomen.

Bisher wurde die zur Inbetriebnahme einer Ethylenanlage erforderliche Mindestmenge an Rohgas durch Spaltung des Kohlenwasserstoffeinsatzes erzeugt. Bis diese Mindestmenge, etwa 60 % der Anlagenlast, erreicht war, wurde dieses Rohgas und anschließend auch der Rohgasüberschuß, der nach der Inbetriebnahme der Rohgasverdichtung bis zum Kaltfahren des Zerlegungsteiles der Anlage vorlag, bis auf eine kleinere Gasmenge, die als Heizgas für die Spaltung verwendet werden konnte, abgefackelt. Um die Inbetriebnahmekosten zu minimieren wurde bisher angestrebt, die Zeit vom Inbetriebnahmebeginn bis zur Herstellung des spezifikationsgerechten Produktes zu verkürzen. Hierzu wurden unterschiedliche Recycleleitungen vorgesehen und die Anlagenleistung bei der Inbetriebnahme reduziert. Die Fackeltätigkeit wurde dadurch lediglich eingeschränkt.

Aufgabe der Erfindung ist es daher, ein umweltschonenderes Verfahren zur Ethylenerzeugung vorzuschlagen.

Diese Aufgabe wird erfindungsgemäß gelöst von einem Verfahren mit den Merkmalen des Anspruchs 1. Ausführungen der Erfindung sind Gegenstand von Unteransprüchen.

Kennzeichnend an der Erfindung ist, daß bei der Inbetriebnahme des Verfahrens zeitweise Fremd-Ethylen und/oder Fremd-C3 der Rohgasverdichtung zugeführt, außerdem ein Strom aus der C2-Hydrierung und ein C3-Strom aus der C3/C4-Trennung zusammengeführt und als ein erster Recyclestrom vor die Rohgasverdichtung zurückgeführt werden.

Die Zufuhr dieser Fremdgase, eventuell auch höherer Kohlenwasserstoffe, ermöglicht zusammen mit dem ersten Recyclestrom eine frühe Inbetriebnahme des Zerlegungsteiles und darauffolgend die allmähliche Zumischung von Rohgas ohne Fackeltätigkeit.

Als Kohlenwasserstoffeinsatz kann Naphtha, ein anderer Erdöltyp, ein Erdölbestandteil oder ein beliebiges Gemisch aus Erdölbestandteilen verwendet werden.

Das während der Inbetriebnahme zugeführte Fremd-C3 kann Propan, Propylen oder ein Gemisch von beiden enthalten.

Mit Vorteil kann der C4 plus-Strom einer C4/C5-Trennung zugeführt werden, in der ein C4-Produkt anfällt, außerdem ein C5 plus-Strom, der bei der Inbetriebnahme zeitweise zusammen mit einem Rohbenzin, das bei der Rohgasverdichtung anfällt und über eine Benzinstabilisierung geleitet wird, dem Kohlenwasserstoffeinsatz beigemischt wird.

Bevorzugt wird das Fremd-Ethylen in einer ersten Phase der Inbetriebnahme des Verfahrens gasförmig zur Rohgasverdichtung geleitet, ein Hauptverfahrensstrang von der Quenchung auf der Niederdruckseite der Rohgasverdichtung bis zur Rohgastrocknung und -vorkühlung, C2/C3-Trennung, C2-Hydrierung und einer C1/C2-Tiefkühlung und -Trennung auf der Hochdruckseite der Rohgasverdichtung mit dem Fremd-Ethylen befüllt, dann die Verdichtung in Betrieb genommen und ein Verdichtungsenddruck zwischen 20 und 30 bar eingestellt.

In einer zweiten Phase der Inbetriebnahme wird bevorzugt die Quenchung und die C1/C2-Tiefkühlung und -Trennung vom Hauptverfahrensstrang abgetrennt, der Strom aus der C2-Hydrierung im ersten Recyclestrom vor die Rohgasverdichtung zurückgeführt, Fremd-C3 gasförmig zur Rohgasverdichtung geleitet, die Rohgasvorkühlung und -trocknung mit Kältemittel beaufschlagt und kaltgefahren, das Fremd-C3 und ein Teil des C2 kondensiert und flüssig zur C2/C3-Trennung geleitet, dort ein C2-freies C3 flüssig zur C3/C4-Trennung gefahren, dort bis auf einen C3-Produktstrom verdampft und zusammen mit dem besagten Strom aus der C2-Hydrierung im ersten Recyclestrom vor die Rohgasverdichtung zurückgeführt.

In einer dritten Phase der Inbetriebnahme wird bevorzugt ein erster Ofen der Spaltung mit Kohlenwasserstoffeinsatz beaufschlagt und das entstehende Rohgas dem Hauptverfahrensstrang zugeschaltet. Dadurch gelangt zusätzlich C2 minus in die C2/C3-Trennung, wird über die C2-Hydrierung geleitet und ein Teil des hydrierten Gases als Heizgas abgezweigt, außerdem wird aus der C3/C4-Trennung ein nicht der Spezifikation entsprechendes C3-Produkt zwischengelagert. Es fällt ein flüssiger C4 plus-Strom an und wird in eine C4/C5-Trennung geleitet, wo ein C4-Produkt abgegeben wird und ein flüssiges C5 plus-Produkt entsteht, das zusammen mit einer bei der Verdichtung anfallenden und über eine Stabilisierung geleiteten Benzinfraktion dem Kohlenwasserstoffeinsatz in einem zweiten Recyclestrom zugeleitet wird. Der Einsatz zur Spaltung wird nun erhöht, bis sich ein stabiler Betrieb der C2-Hydrierung einstellt.

In einer vierten Phase der Inbetriebnahme werden, sobald der Austrittsstrom aus der C2-Hydrierung spezifikationsgerecht ist, der C2 minus-Strom in die mit Ethylenkältemittel beaufschlagte Tiefkühlung geschaltet und die Kondensate der Tiefkühlung in die C1/C2-Trennung geleitet, deren gasförmiges Produkt vollständig als Heizgas in der Spaltung verwendet wird und deren flüssiges Produkt, sobald es methanfrei ist, zur inzwischen kaltgefahrenen C2-Trennung geschaltet wird, wo ein spezifikationsgerechtes Ethylenprodukt anfällt.

Mit fallender Temperatur in der Tiefkühlung und C1/C2-Trennung und ausreichender Reinheit des Wasserstoffstromes aus der Tiefkühlung und C1/C2-Trennung, werden die Methanisierung, die C3-Hydrierung, das C3-Stripping, und die C3-Trennung in Betrieb genommen und es wird ein Propylenprodukt erzeugt, außerdem werden die Benzinhydrierung und -fraktionierung in Betrieb genommen und ein spezifikationsgerechtes Benzinprodukt erzeugt. Deshalb kann die Benzinrückführung im zweiten Recyclestrom zum Kohlenwasserstoffeinsatz entsprechend gedrosselt und schließlich abgesperrt werden.

Die Erfindung wird anhand einer Ausführungsform mit zwei Figuren näher erläutert.
Fig. 1 zeigt ein erfindungsgemäßes Verfahren zur Ethylenerzeugung.
Fig. 2 zeigt eine schrittweise Inbetriebnahme des erfindungsgemäßen Verfahrens nach Fig. 1.

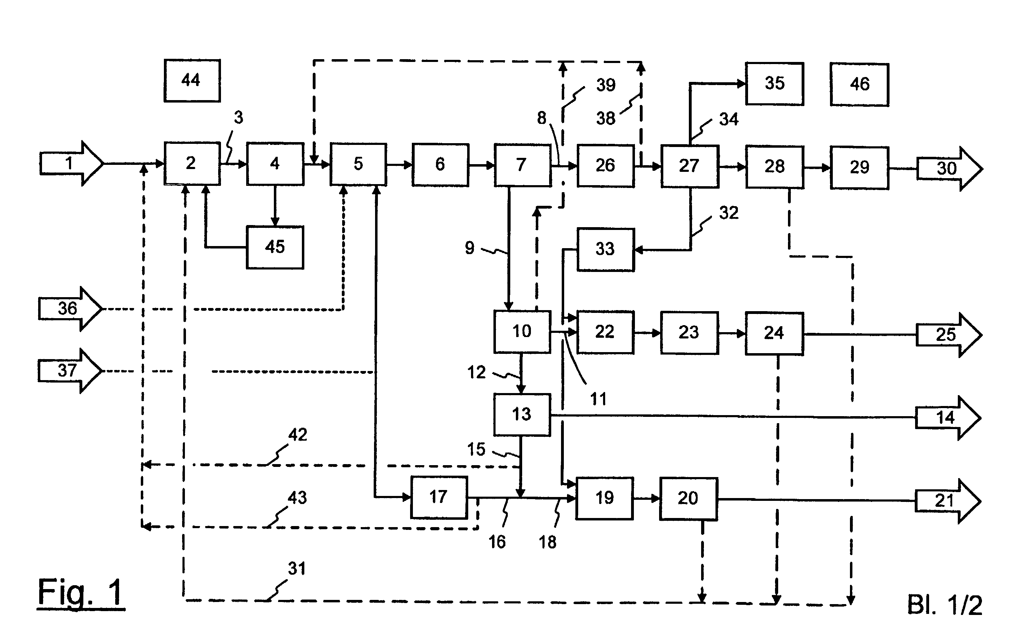

Fig. 1 zeigt ein vereinfachtes Blockschema eines erfindungsgemäßen Verfahrens zur Ethylenerzeugung. Ein Naphthaeinsatz 1 wird einer Spaltung 2 unterzogen. Das so erzeugte Rohgas 3 durchläuft eine Quenchung mit Wasserwäsche 4, eine Rohgasverdichtung 5 und eine Rohgastrocknung und -vorkühlung 6 und wird in einer C2/C3-Trennung 7 in einen C2 minus-Strom 8 und in einen C3 plus-Strom 9 aufgeteilt, der C3 plus-Strom 9 in einer C3/C4-Trennung 10 in einen C3-Strom 11 und einen C4 plus-Strom 12 und der C4 plus-Strom in einer C4/C5-Trennung 13 in ein C4-Produkt 14 und einen C5 plus-Strom 15. Der C5 plus-Strom 15 wird als ein erster Benzinstrom zusammen mit einem zweiten Benzinstrom 16, der bei der Rohgasverdichtung 5 anfällt und über eine Benzinstabilisierung 17 geleitet wird, als Strom 18 erst in eine Benzinhydrierung 19 und dann in eine Benzinfraktionierung 20 geleitet, in der ein Benzinprodukt 21 gewonnen wird. Der C3-Strom 11 aus der C3/C4-Trennung 10 wird über eine C3-Hydrierung 22, ein C3-Stripping 23 und über eine C3-Trennung 24 geführt und so ein Propylenprodukt 25 gewonnen. Zur Ethylengewinnung wird der C2 minus-Strom 8 aus der C2/C3-Trennung 7 über eine C2-Hydrierung 26, über eine Tiefkühlung und C1/C2-Trennung 27, über eine C2-Trennung 28 und über einen Ethylenkreislauf 29 geleitet und so ein Ethylenprodukt 30 gewonnen. Nicht als Produkte spezifizierte Verfahrensströme, die beispielsweise bei der Gewinnung der reinen Produkte in der C2-Trennung 28, C3-Trennung 24 und in der Benzinfraktionierung 20 anfallen, werden zusammengefaßt (Strom 31) und in der Spaltung 2 zum Heizen der Spaltöfen eingesetzt. Ein Wasserstoffstrom 32 aus der Tiefkühlung der C1/C2-Trennung 27 wird über eine Methanisierung 33 geleitet und zur C3-Hydrierung 22 und zur Benzinhydrierung 19 verwendet, andere bei der Tiefkühlung nicht kondensierende Gase 34 werden dem Heizgassystem 35 zugeführt.

Für die Inbetriebnahme des erfindungsgemäßen Verfahrens von Bedeutung sind eine Fremd-Ethylen-Einspeisung 36, eine Fremd-Propylen-Einspeisung 37 und ein Strom 38 aus der C2-Hydrierung 26 der zusammen mit einem Strom 39 aus der C3/C4-Trennung 10 einen ersten Recyclestrom 40 vor die Rohgasverdichtung 5 bildet, außerdem ein zweiter Recyclestrom 41, der durch die Zusammenführung eines Stromes 42 aus der C4/C5-Trennung 13 und eines Stromes 43 aus der Benzinstabilisierung gebildet wird.

An Hilfsystemen enthält das Verfahren Dampfsysteme 44, ein Prozeßdampfsystem 45 und zur Kälteerzeugung einen Propylenkreislauf 46.

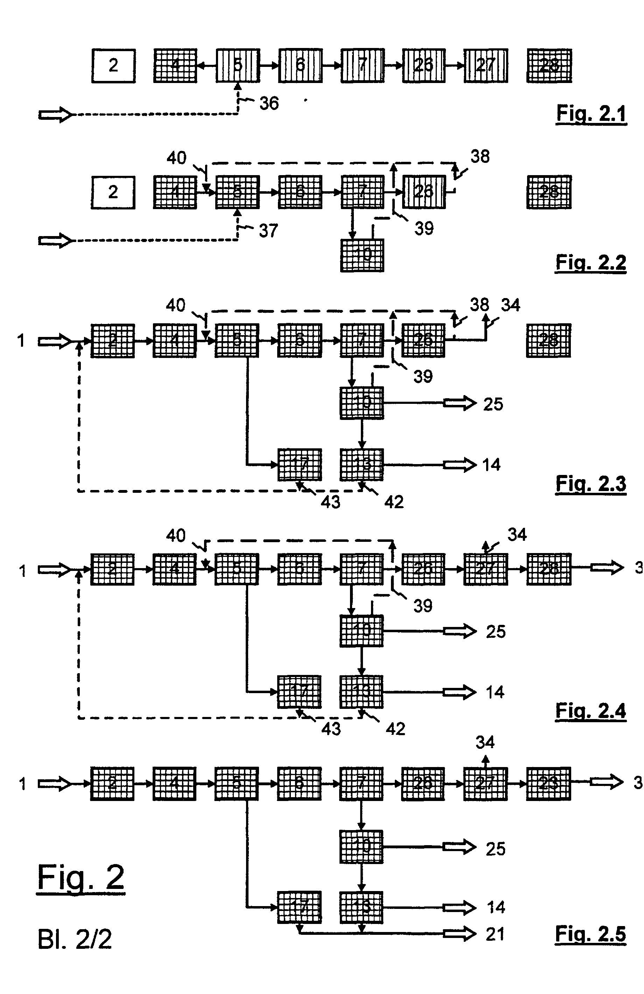

Anhand der mit Fig. 1 erläuterten Ausführungsform des erfindungsgemäßen Verfahrens wird mit der noch stärker schematisierten Fig. 2 dessen schrittweise Inbetriebnahme ohne Fackeltätigkeit anhand einer Darstellung von aufeinanderfolgenden Inbetriebnahmephasen näher erläutert. Schraffierte Blöcke im Schema der Fig. 2 befinden sich auf Betriebsdruck, karierte Blöcke sind in Betrieb.

Voraussetzung für die Inbetriebnahme ist eine Versorgung mit Hochdruckdampf, beispielsweise aus einem Werksnetz, in dem Maße, wie Hochdruckdampf benötigt wird und aus der Abhitze der Spaltung nicht oder noch nicht zur Verfügung steht. Wie bei einem Verfahren nach dem Stand der Technik werden Kältekreisläufe (Propylenkreislauf 46, Ethylenkreislauf mit C2-Trennung 28) Quenchöl- und Quenchwasserkreislauf der Quenchung und Wasserwäsche 4 sowie das Prozeßdampfsystem (45 in Fig. 1) in Betrieb genommen. Einige Spaltöfen der Spaltung 2 werden mit Prozeßdampf auf Standbytemperatur hochgeheizt. Darauf folgen einzelne Phasen der Inbetriebnahme.
1. Inbetriebnahmephase (Fig 2.1)
   - Einspeisung von gasförmigem Fremd-Ethylen 36 von der Anlagengrenze zur Rohgasverdichtung 5 und Aufdrücken des vorderen Rohgasweges 4, 5 einschließlich der Quenchung mit Wasserwäsche 4 bis zum Eintritt der Vorkühlung 6 auf einen Druck von ca. 1,5 bar Überdruck.
   - Anfahren des Rohgasverdichters 5 unter ständiger Nachspeisung von Fremd-Ethylen 36 und Einstellung eines Verdichterenddruckes von ca. 26 bar.
   - Aufdrücken der Druckseite des Rohgasweges 6, 7, 26, 27 bis einschließlich Tiefkühlung der C1/C2-Trennung 27 mit Ethylen bis 26 bar.
   - Falls das Fremd-Ethylen 36 an der Anlagengrenze mit entsprechendem Druck zur Verfügung steht, kann der Schritt Aufdrücken des Rohgasweges auch vor der Inbetriebnahme des Verdichters durchgeführt werden.
2. Inbetriebnahmephase (Fig. 2.2)
   - Abhängen der Tiefkühlung der C1/C2-Trennung 27 und Einstellen des Stromes 38 vom Austritt der C2-Hydrierung 26 über den Recyclestrom 40 zurück zur Niederdruckseite der Rohgasverdichtung 5. Die Recyclemenge richtet sich nach der erforderlichen Mindestmenge der C2-Hydrierung 26.
   - Der nächste Schritt ist die Einstellung des Stromes 39 über den Recyclestrom 40 zur Saugseite der Rohgasverdichtung 5 und das Kaltfahren der Vorkühlung 6. Dazu wird zum Rohgasverdichter 5 gasförmiges Fremd-Propylen 37 gefahren. Anschließend werden die einzelnen Kondensatoren in der Vorkühlung 6 nacheinander mit Kältemittel beaufschlagt. Das Propylen und ein Teil des Ethylens kondensiert und wird zur C2/C3-Trennung 7 gefahren.
   - Die C2/C3-Trennung 7 wird in Betrieb genommen und so eingestellt, daß in der Kolonne dieser Trennung der Kopf C3-frei und der Sumpf C2-frei ist.
   - Das C3 wird flüssig zur C3/C4-Trennung 10 gefahren, dort verdampft und gasförmig im Strom 39 über den Recyclestrom 40 zur Rohgasverdichtung 5 zurückgeführt.
   - Somit befindet sich der Zerlegungsteil 6, 7, 10 bis vor die Tiefkühlung und C1/C2-Trennung 27 im Recyclebetrieb und ist bereit, Rohgas 3 aus den Öfen der Spaltung 2 zu übemehmen.
3. Inbetriebnahmephase (Fig. 2.3)
   - Der erste Ofen der Spaltung 2 wird mit Naphthaeinsatz beaufschlagt.
   - Das Spaltgas (entspricht Rohgas 3 aus der Spaltung 2 in Fig. 1) durchläuft die Quenchung mit Wasserwäsche 4 und,die Verdichtung 5 und wird in der Vorkühlung 6 in entsprechende Fraktionen zerlegt. Das Kopfgas der Kolonne der C2/C3-Trennung 7 ist C3-frei und wird in die C2-Hydrierung 26 gefahren.
   - Der C2 minus-Produktanteil geht nach der C2-Hydrierung 26 im Strom 34 zum Heizgassystem (35 in Fig. 1).
   - Das Sumpfprodukt der Kolonne der C2/C3-Trennung 7 wird in der C3/C4-Kolonne (der C3/C4-Trennung 10) getrennt und das C3 im Strom 39 über den Recyclestrom 40 teilweise zur Rohgasverdichtung 5 zurückgeführt. Ein C3-Produktanteil (11 in Fig. 1) wird in einem in Figur 2 nicht dargestellten C3-Tank als nicht spezifikationsgerechtes Propylen-Produkt 25 zwischengelagert. Die C4 plus-Fraktion (C4 plus-Strom 12 in Fig. 1) wird in die C4/C5-Trennung 13 eingespeist.
   - Das Sumpfprodukt der Kolonne der C4/C5-Trennung 13 und die Benzinfraktion aus der Stabilisierung 17 werden als Strom 42 und 43 dem Naphthaeinsatz 1 der Spaltung 2 beigemischt. Das C4 wird als Produkt 14 abgegeben.
   - Der Einsatz zur Spaltung 2 wird nun soweit erhöht, bis ein stabiler Betrieb in der C2-Hydrierung 26 gewährleistet ist.
4. Inbetriebnahmephase (Fig. 2.4)
   - Sobald der Austrittsstrom aus der C2-Hydrierung 26 spezifikationsgerecht ist, wird dieser als C2 minus-Strom in die Tiefkühlung und C1/C2-Trennung 27 durchgestellt und die Kondensatoren in der Tiefkühlung mit Ethylen-Kältemittel beaufschlagt.
   - Die Kondensate der Tiefkühlung gehen zur C1/C2-Trennung 27. Die dort nicht kondensierten Gase 34 werden im Strom 34 zum Heizgassystem (35 in Fig. 1) gefahren und ersetzen dort Importheizgas. Sobald das Sumpfprodukt der Kolonne der C1/C2-Trennung 27 spezifikationsgerecht ist, wird zur C2-Trennung 28 durchgestellt. Da die C2-Trennung 28 und der Ethylenkreislauf (29 in Fig. 1) bereits in Betrieb sind, fällt spezifikationsgerechtes Ethylenprodukt 30 an.
5. Abschließende Inbetriebnahmephase (Figur 2.5)
   - Mit fallenden Temperaturen in der Tiefkühlung und C1/C2-Trennung 27 verbessern sich die Produktreinheiten von Methan und Wasserstoff.
   - Sobald spezifikationsgerechter Wasserstoff zur Verfügung steht, erfolgt die Inbetriebnahme der Methanisierung (33 in Fig. 1), des C3- und Benzin-Weges (22, 23, 24 und 19, 20 in Figur 1) mit deren Hydrierungen 22 und 19.
   - Die Rückführung der Benzinfraktion im Strom 42 und 43 zur Spaltung 2 wird eingestellt und die Anlagenlast erhöht, sobald die C3 plus-Produkte 14, 21, 25 (C4, Benzin und Propylen) spezifikationsgerecht abgegeben werden.

Bei kontrolliertem Ablauf aller Einzelschritte der Inbetriebnahmephasen erfolgt die Gesamtinbetriebnahme von Anlagen mit dem erfindungsgemäßen Verfahren ohne jede Fackeltätigkeit.

## Patentansprüche

1. Verfahren zur Ethylenerzeugung aus einem Kohlenwasserstoffeinsatz, wobei der Kohlenwasserstoffeinsatz einer Spaltung unterzogen wird, das so erzeugte Rohgas eine Quenchung mit Wasserwäsche, eine Rohgasverdichtung und eine Rohgastrocknung und -vorkühlung durchläuft und in einen Zerlegungsteil geleitet wird, im Zerlegungsteil eine C2/C3-Trennung des vorgekühlten Rohgases in einen C2 minus-Strom und in einen C3 plus-Strom erfolgt, besagter C2 minus-Strom über eine C2-Hydrierung geleitet und besagter C3 plus-Strom mit Hilfe einer C3/C4-Trennung in einen C3-Strom und in einen C4 plus-Strom zerlegt wird, **dadurch gekennzeichnet, daß** bei der Inbetriebnahme des Verfahrens zeitweise Fremd-Ethylen und/oder Fremd-C3 der Rohgasverdichtung zugeführt, außerdem ein Strom aus der C2-Hydrierung und ein C3-Strom aus der C3/C4-Trennung zusammengeführt und als ein erster Recyclestrom vor die Rohgasverdichtung zurückgeführt werden.

2. Verfahren nach Anspruch 1, **dadurch gekennzeichnet, daß** das Fremd-C3 Propan, Propylen oder ein Gemisch von beiden enthält.

3. Verfahren nach einem der Ansprüche 1 oder 2, **dadurch gekennzeichnet, daß** der C4 plus-Strom einer C4/C5-Trennung zugeführt wird, in der ein C4-Produkt anfällt, außerdem ein C5 plus-Strom, der bei der Inbetriebnahme zeitweise zusammen mit einem Rohbenzin, das bei der Rohgasverdichtung anfällt und über eine Benzinstabilisierung geleitet wird, dem Kohlenwasserstoffeinsatz beigemischt wird.

4. Verfahren nach einem der Ansprüche 1 bis 3, **dadurch gekennzeichnet, daß** das Fremd-Ethylen in einer ersten Phase der Inbetriebnahme des Verfahrens gasförmig zur Rohgasverdichtung geleitet wird, ein Hauptverfahrensstrang von der Quenchung auf der Niederdruckseite der Rohgasverdichtung bis zur Rohgastrocknung und -vorkühlung, C2/C3-Trennung, C2-Hydrierung und einer C1/C2-Tiefkühlung und -Trennung auf der Hochdruckseite der Rohgasverdichtung mit dem Fremd-Ethylen befüllt wird, dann die Verdichtung in Betrieb genommen und ein Verdichtungsenddruck zwischen 20 und 30 bar eingestellt wird.

5. Verfahren nach einem der Ansprüche 1 bis 4, **dadurch gekennzeichnet, daß** in einer zweiten Phase der Inbetriebnahme die Quenchung und die C1/C2-Tiefkühlung und -Trennung vom Hauptverfahrensstrang abgetrennt werden, daß der Strom aus der C2-Hydrierung im ersten Recyclestrom vor die Rohgasverdichtung zurückgeführt wird, Fremd-C3 gasförmig zur Rohgasverdichtung geleitet wird, die Rohgasvorkühlung und -trocknung mit Kältemittel beaufschlagt und kaltgefahren wird, das Fremd-C3 und ein Teil des C2 kondensiert und flüssig zur C2/C3-Trennung geleitet wird, dort ein C2-freies C3 flüssig zur C3/C4-Trennung gefahren, dort bis auf einen C3-Produktstrom verdampft und zusammen mit dem besagten Strom aus der C2-Hydrierung im ersten Recyclestrom vor die Rohgasverdichtung zurückgeführt wird.

6. Verfahren nach einem der Ansprüche 1 bis 5, **dadurch gekennzeichnet, daß** in einer dritte Phase der Inbetriebnahme ein erster Ofen der Spaltung mit Kohlenwasserstoffeinsatz beaufschlagt und das entstehende Rohgas dem Hauptverfahrensstrang zugeschaltet wird, dadurch zusätzlich C2 minus in die C2/C3-Trennung gelangt, über die C2-Hydrierung geleitet wird und ein Teil des hydrierten Gases als Heizgas abgezweigt wird, daß außerdem aus der C3/C4-Trennung ein nicht der Spezifikation entsprechendes C3-Produkt zwischengelagert wird und ein flüssiger C4 plus-Strom anfällt und in eine C4/C5-Trennung geleitet wird, wo ein C4-Produkt abgegeben wird und ein flüssiges C5 plus-Produkt entsteht, das zusammen mit einer bei der Verdichtung anfallenden und über eine Stabilisierung geleiteten Benzinfraktion dem Kohlenwasserstoffeinsatz in einem zweiten Recyclestrom zugeleitet wird, und daß nun der Einsatz zur Spaltung erhöht wird, bis sich ein stabiler Betrieb der C2-Hydrierung einstellt.

7. Verfahren nach einem der Ansprüche 1 bis 6, **dadurch gekennzeichnet, daß** in einer vierten Phase der Inbetriebnahme, sobald der Austrittsstrom aus der C2-Hydrierung spezifikationsgerecht ist, der C2 minus-Strom in die mit Ethylenkältemittel beaufschlagte Tiefkühlung geschaltet und die Kondensate der Tiefkühlung in die C1/C2-Trennung geleitet werden, deren gasförmiges Produkt vollständig als Heizgas in der Spaltung verwendet wird und deren flüssiges Produkt, sobald es methanfrei ist, zur inzwischen kaltgefahrenen C2-Trennung geschaltet wird, wo ein spezifikationsgerechtes Ethylenprodukt anfällt.

8. Verfahren nach einem der Ansprüche 1 bis 7, **dadurch gekennzeichnet, daß** in einer abschließenden Phase der Inbetriebnahme mit fallender Temperatur in der Tiefkühlung und C1/C2-Trennung und ausreichender Reinheit des Wasserstoffstromes aus der Tiefkühlung und C1/C2-Trennung die Methanisierung, die C3-Hydrierung, das C3-Stripping, und die C3-Trennung in Betrieb genommen werden und ein Propylenprodukt erzeugt wird, außerdem die Benzinhydrierung und -fraktionierung in Betrieb genommen und ein spezifikationsgerechtes Benzinprodukt erzeugt wird und infolgedessen die Benzinrückführung im zweiten Recyclestrom zum Kohlenwasserstoffeinsatz entsprechend gedrosselt und schließlich abgesperrt wird.

## Claims

1. Process for producing ethylene from a hydrocarbon feedstock comprising subjecting the hydrocarbon feedstock to cracking, quenching resultant crude gas with water, subjecting resultant quenched crude gas to compression, subjecting resultant compressed crude gas to drying and precooling, separating resultant precooled crude gas in a C2/C3 separation step into a C2- stream and a C3+ stream, subjecting said C2- stream to C2 hydrogenation, and separating said C3+ stream in a C3/C4 separation step into a C3 stream and a C4+ **characterized in that** it comprises, upon start-up of the process, feeding foreign ethylene, foreign C3, or both to the crude gas compression and merging a stream from C2 hydrogenation and a C3 stream from the C3/C4 separation, and recycling the merged stream as a first recycle stream before the crude gas compression.

2. Process according to Claim 1, **characterized in that** the foreign C3 contains propane, propylene or a mixture of the two.

3. Process according to Claim 1 or 2, **characterized in that** it comprises feeding the C4+ stream to a C4/C5 separation, in which a C4 product accumulates, and sending a C5+ stream, which accumulates during start-up, together with a raw gasoline, which accumulates in crude gas compression, through gasoline stabilization, and then admixing the resultant stream with said hydrocarbon feedstock.

4. Process according to any of Claims 1 to 3, **characterized in that** it comprises sending foreign ethylene, in a first phase of the start-up of the process, in gaseous form to crude gas compression filling with foreign ethylene a main process leg from quenching on the lower pressure side of crude gas compression to crude gas drying and precooling, C2 / C3 separation, C2 hydrogenation, and a C1/C2 deep-cooling and separation on the high-pressure side of crude gas compression, then carrying out compression, and establishing a compression final pressure of 20-30 bar.

5. Process according to any of Claims 1 to 4, **characterized in that** it comprises, in a second phase of start-up, separating the quenching and C1/C2 deep-cooling and separation from said main process leg, recycling the stream from C2 hydrogenation into said first recycle stream before crude gas compression supplying foreign C3 in gaseous form to crude gas compression, and feeding foreign C3 to crude gas precooling and drying with refrigerants, subjecting the hydrocarbon feedstock to a first cracking furnace and condensing foreign C3 and a portion of C2 and sending the condensate in liquid form to C2/C3 separation, and sending a C2-free C3 stream in liquid form to C3/C4 separation, wherein the C2-free C3 stream is evaporated into a C3 product stream, and recycled together with said stream discharged from C2 hydrogenation into said first recycle stream before crude gas compression.

6. Process according to any of Claims 1 to 5, **characterized in that** it comprises in a third phrase of start-up, subjecting the hydrocarbon feedstock to a first cracking furnace feeding crude gas to said main process leg, delivering C2- to C2/C3 separation and through C2 hydrogenation, and diverting a portion of hydrogenated gas for use as fuel gas, subjecting a C3 product, not meeting specifications, from C3/C4 separation to intermediate storage, sending a liquid C4+ stream which accumulates to a C4/C5 separation, where a C4 product is made and a liquid C5+ product is produced, and sending said liquid C5+ product, together with a gasoline fraction that accumulates during compression, and is stabilized to said hydrocarbon feedstock in a second recycle steam, and increasing feedstock to cracking to provide a C2 hydrogenation operation of increased stability.

7. Process according to any of Claims 1 to 6, **characterized in that** it comprises in a fourth phase of start-up, as soon as the outlet stream from C2 hydrogenation meets specifications, sending the C2-stream to a deep-cooling system provided with ethylene refrigerant, sending condensate from said deep-cooling to C1/C2 separation, and using the entire gaseous product from said C1/C2 separation used as a fuel gas in cracking, and sending liquid product, freed of methane, to cooled C2 separation, where an ethylene product meeting specifications accumulates.

8. Process according to any of Claims 1 to 7, **characterized in that** it comprises, in a final phase of start-up, producing a hydrogen stream of sufficient purity from the deep-cooling and C1/C2 separation, putting into operation methanization, C3 hydrogenation, C3 stripping and C3 separation and producing a propylene product, carrying out gasoline hydrogenation and fractionation and producing a gasoline product meeting specifications, and then throttling the recycling of gasoline in the second recycle stream to the hydrocarbon feedstock and finally shutting down the recycle.

## Revendications

1. Procédé de production d'éthylène à partir d'une charge d'hydrocarbures, la charge d'hydrocarbures étant soumise à un clivage, le gaz brut ainsi produit passant à travers une trempe avec lavage à l'eau, une compression de gaz brut et un séchage et un refroidissement préalable de gaz brut et étant conduit à une section de fractionnement, dans la section de fractionnement ayant lieu une séparation C2/C3 du gaz brut pré-refroidi en un courant C2-moins et en un courant C3-plus, ledit courant C2-moins étant conduit à travers une hydrogénation C2 et ledit courant C3-plus étant fractionné, à l'aide d'une séparation C3/C4, en un courant C3 et en un courant C4-plus, **caractérisé en ce que**, lors de la mise en service du procédé, de l'éthylène externe et/ou du C3 externe sont alimentés par moments à la compression du gaz brut, **en ce qu'**en outre un courant provenant de l'hydrogénation C2 et un courant C3 provenant de la séparation C3/C4 sont combinés et sont reconduits en tant que premier courant de recyclage avant la compression du gaz brut.

2. Procédé selon la revendication 1, **caractérisé en ce que** le C3 externe contient du propane, du propylène ou un mélange des deux.

3. Procédé selon l'une quelconque des revendications 1 ou 2, **caractérisé en ce que** le courant C4-plus est alimenté à la séparation C4/C5, dans laquelle un produit C4 se forme, **en ce qu'**en outre un courant C5-plus est mélangé à la charge d'hydrocarbures lors de la mise en service par moments, conjointement à une essence de distillation directe, qui se forme lors de la compression du gaz brut, et qui est conduite à travers un processus de stabilisation de l'essence.

4. Procédé selon l'une quelconque des revendications 1 à 3, **caractérisé en ce que** l'éthylène externe, dans une première phase de la mise en service du procédé, est conduit sous forme gazeuse à la compression du gaz brut, **en ce qu'**un tronçon du procédé principal de la trempe sur le côté basse pression de la compression du gaz brut jusqu'au séchage et au refroidissement préalable du gaz brut, la séparation C2/C3, l'hydrogénation C2 et un refroidissement basse température et une séparation C1/C2 sur le côté haute pression de la compression du gaz brut, est rempli de l'éthylène externe, **en ce que** la compression est alors mise en service et **en ce qu'**une pression finale de compression comprise entre 20 et 30 bars est alors ajustée.

5. Procédé selon l'une quelconque des revendications 1 à 4, **caractérisé en ce que**, dans une deuxième phase de la mise en service, la trempe et le refroidissement basse température et la séparation C1/C2 sont séparés du tronçon du procédé principal, **en ce que** le courant provenant de l'hydrogénation C2 est reconduit dans un premier courant de recyclage avant la compression du gaz brut, **en ce que** le C3 externe est conduit sous forme gazeuse vers la compression du gaz brut, **en ce que** le refroidissement préalable et le séchage du gaz brut sont soumis à l'effet d'un réfrigérant et refroidis, **en ce que** le C3 externe et une partie du C2 sont condensés et conduits sous forme liquide à la séparation C2/C3, **en ce qu'**un C3 exempt de C2 y est conduit sous forme liquide à la séparation C3/C4, **en ce que** ce dernier y est évaporé jusqu'à un courant de produit C3 et est reconduit, conjointement audit courant provenant de l'hydrogénation C2, dans le premier courant de recyclage avant la compression du gaz brut.

6. Procédé selon l'une quelconque des revendications 1 à 5, **caractérisé en ce que**, dans une troisième phase de la mise en service, un premier four est soumis au clivage à l'aide de la charge d'hydrocarbures et **en ce que** le gaz brut qui se forme est raccordé au tronçon du procédé principal, **en ce qu'**en plus le C2-moins parvient à la séparation C2/C3, est conduit à travers l'hydrogénation C2 et **en ce qu'**une partie du gaz hydrogéné subit une dérivation en tant que gaz de chauffage, **en ce qu'**en outre un produit C3, non correspondant à la spécification, en provenance de la séparation C3/C4, subit un stockage intermédiaire et **en ce qu'**un courant C4-plus liquide se forme et est conduit à la séparation C4/C5, où un produit C4 est dégagé et où un produit C5-plus liquide se forme, qui est conduit à la charge d'hydrocarbures, conjointement à une fraction d'essence, se formant lors de la compression et conduite à travers une stabilisation, dans un deuxième courant de recyclage, et **en ce que**, maintenant, la charge destinée au clivage est augmentée, jusqu'à obtention d'un fonctionnement stable de l'hydrogénation C2.

7. Procédé selon l'une quelconque des revendications 1 à 6, **caractérisé en ce que**, dans une quatrième phase de la mise en service, dès que le courant de sortie provenant de l'hydrogénation C2 est conforme à la spécification, le courant C2-minus est enclenché dans le refroidissement basse température soumis au réfrigérant d'éthylène et **en ce que** les condensats du refroidissement basse température sont conduits dans la séparation C1/C2, dont le produit gazeux est utilisé entièrement en tant que gaz de chauffage dans le clivage et dont le produit liquide, dès qu'il est exempt de méthane, est enclenché vers la séparation C2, entre-temps soumise à refroidissement, où il se forme un produit d'éthylène conforme à la spécification.

8. Procédé selon l'une quelconque des revendications 1 à 7, **caractérisé en ce que**, dans une phase finale de la mise en service à température en chute dans le refroidissement basse température et la séparation C1/C2 et à pureté suffisante du courant d'hydrogène provenant du refroidissement basse température et de la séparation C1/C2, la méthanisation, l'hydrogénation C3, le stripage C3 et la séparation C3 sont mis en service et **en ce qu'**un produit de propylène est produit, **en ce qu'**en outre l'hydrogénation et le fractionnement de l'essence sont mis en service et **en ce qu'**un produit d'essence conforme à la spécification est produit et **en ce qu'**à la suite une recirculation de l'essence dans le deuxième courant de recyclage en direction de la charge d'hydrocarbures est réduite de manière correspondante et est finalement interrompue.
